# EUROPÄISCHE PATENTSCHRIFT

(11) **EP 0 372 303 B1**
(45) Veröffentlichungstag und Bekanntmachung des Hinweises auf die Patenterteilung: **29.09.1993**
(21) Anmeldenummer: 89121657.4
(22) Anmeldetag: 23.11.1989
(51) Int. Cl.: H05B 41/29

(54) **Schaltungsanordnung zum Betrieb einer Niederdruckentladungslampe**
Circuit arrangement for operating a low-pressure discharge lamp
Circuit pour le fonctionnement d'une lampe de décharge à basse pression

(30) Priorität: 07.12.1988 DE 3841227
(43) Veröffentlichungstag der Anmeldung: 13.06.1990
(73) Patentinhaber: Patent-Treuhand-Gesellschaft für elektrische Glühlampen mbH, 81543 München (DE)
(72) Erfinder: Zuchtriegel, Anton, D-8028 Taufkirchen (DE)

(56) Entgegenhaltungen:
- DE-A- 3 623 749
- GB-A- 2 106 339
- GB-A- 2 180 418
- US-A- 4 075 476
- US-A- 4 563 719

## Beschreibung

Die Erfindung betrifft eine Schaltungsanordnung zum hochfrequenten Betrieb einer Niederdruckentladungslampe entsprechend dem Oberbegriff des Anspruchs 1.

In der DE-A-36 23 749 ist eine solche Schaltungsanordnung aufgeführt. Das als Doppelpumpensystem arbeitende aktive Oberwellenfilter beinhaltet dabei einen weiteren Kondensator, der den Mittenabgriff zwischen den beiden zweiten Dioden mit dem Mittenabgriff zwischen den beiden Transistoren verbindet.

Ein solchermaßen aufgebautes Oberwellenfilter ermöglicht bei der oben aufgeführten Schaltungsanordnung eine ausreichende Filterwirkung gemäß IEC-Publikation 82, sofern die Lampenleistung etwa 36 W nicht übersteigt. Sollen mit der Schaltungsanordnung Leuchtstofflampen höherer Leistung bzw. mehrere parallel oder in Reihe geschaltete Leuchtstofflampen betrieben werden, so werden im Oberwellenfilter Pumpkondensatoren mit größeren Kapazitäten benötigt. Dadurch ergeben sich jedoch beim Gegentaktfrequenzgenerator große Schaltverluste die in bezug auf eine wirtschaftliche Arbeitsweise der Schaltungsanordnung nicht mehr vertretbar sind. Außerdem wird eine Netzstrom-Kurvenform erzeugt, die beim Strom-Nulldurchgang zu große höher-harmonische Anteile (Sprungfunktion) besitzt.

Aufgabe der Erfindung ist es, eine wirtschaftlich arbeitende Schaltungsanordnung mit Gegentaktfrequenzgenerator und integriertem Oberwellenfilter zu schaffen, wobei das aktive Oberwellenfilter auch bei Betrieb von Lampen höherer Aufnahmeleistung bzw. Mehrlampenbetrieb eine den IEC-Vorschriften entsprechende sinusförmige Netzstromaufnahme gewährleistet. Die Schaltungsanordnung sollte einen einfachen Aufbau aufweisen und kostengünstig herzustellen sein.

Die Aufgabe wird durch das kennzeichnende Merkmal des Anspruchs 1 gelöst. Weitere vorteilhafte Ausgestaltungen der Schaltungsanordnung sind den Unteransprüchen zu entnehmen.

Durch die Ausstattung des einen Zwei ges der Doppelpumpe mit einer reinen Induktivität ergibt sich hier ein Blindstrom-Pumpanteil, der im Gegensatz zu den voreilenden Blindstrom-Pumpanteilen der Kapazitäten in den anderen Zweigen nacheilend ist. Dadurch können in den kapazitiven Zweigen des Oberwellenfilters Kondensatoren mit niedrigen Kapazitäten verwendet werden. Diese werden in den Schaltpausen der Transistoren noch entladen, wodurch es in der Einschaltphase der Transistoren nicht zu einer Kurzschluß-Entladung, verbunden mit hohen Schaltverlusten, kommt.

Die Dimensionierung der Pumpinduktivität bezüglich ihrer Scheinleistung richtet sich nach der erforderlichen Geräteleistung der Schaltungsanordnung. Die Scheinleistung dieser Induktivität sollte jedoch - um optimale Betriebsbedingungen zu gewährleisten - mindestens 25 % der Scheinleistung der Lampendrossel besitzen.

Der in Reihe zur Pumpinduktivität im Oberwellenfilter geschaltete Kondensator dient zur Gleichstrom-Trennung. Er hat damit dieselbe Aufgabe wie der Kopplungskondensator im Serienresonanzkreis. Die Dimensionierung dieses Kondensators ist so zu wählen, daß er mit der Pumpinduktivität keinen Serienresonanzkreis bildet, der eine Resonanzfrequenz im Bereich der Betriebsfrequenz aufweist. Er sollte so ausgelegt sein, daß sich eine möglichst tiefe Resonanzfrequenz ergibt.

Der Kondensator, der den Mittenabgriff zwischen den beiden ersten Dioden mit dem Pluspol des Glättungskondensators verbindet, dient zur Begrenzung der Betriebsgleichspannung am Glättungskondensator durch Ableitung eines Überschußanteils der Pumpenergie aus dem kapazitiven Teil des Oberwellenfilters. Seine Dimensionierung richtet sich nach der Gesamtauslegung der Pumpglieder einschließlich Lampendrossel und der erforderlichen Netzstromkurvenform. Ein Optimum seines Kapazitätswertes ist erreicht, wenn beim Scheitelwert des Netzstroms gerade noch Ladestromspitzen vom Netzgleichrichter zu erkennen sind, jedoch in einer Größe, daß die bestehenden IEC-Vorschriften erfüllt werden. Als Nebeneffekt bildet dieser weitere Kondensator in Serie mit dem Pumpkondensator, der den Mittenabgriff zwischen den beiden ersten Dioden mit dem Mittenabgriff zwischen den Schalttransistoren verbindet, eine Parallelkapazität zum ersten Transistor. Dadurch wird zusätzlich eine Schaltverlustminderung erreicht.

Die Schaltungsanordnung ist durch die nachfolgenden Abbildungen näher veranschaulicht.
- Figur 1: zeigt das Blockschaltbild einer erfindungsgemäßen Schaltungsanordnung mit Oberwellenfilter für eine Niederdruckentladungslampe höherer Wattstufe.
- Figur 2: zeigt das vollständige Schaltbild einer erfindungsgemäßen Schaltungsanordnung mit Oberwellenfilter zum Betrieb einer Niederdruckentladungslampe höherer Wattstufe.

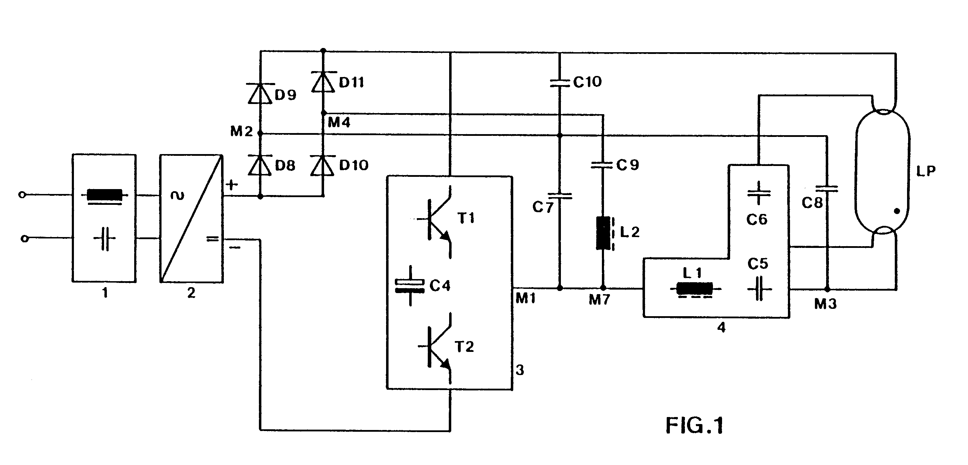

Das Blockschaltbild in Figur 1 gibt Prinzipaufbau der erfindungsgemäßen Schaltungsanordnung für eine Niederdruckentladungslampe wieder. Die Schaltungsanordnung beinhaltet ein Hochfrequenzfilter 1, einen Netzgleichrichter 2 sowie einen Gegentaktfrequenzgenerator 3 mit Ansteuerschaltung und Glättungskondensator, dessen in Reihe liegende gleichsinnig gepolte Schalttransistoren den Gleichstromausgang des Netzgleichrichters 2 überbrücken. Zwischen den Mittenabgriff M1 der Schalttransistoren und den Pluspol des Netzgleichrichters 2 ist über einen Serienresonanzkreis 4 die Niederdruckentladungslampe LP geschaltet.

Das Oberwellenfilter besteht aus einer Reihenschaltung von zwei Dioden D8 und D9, die in Gleichstromvorwärtsrichtung zwischen den Pluspol des Netzgleichrichters 2 und die entsprechende Elektrode der Niederdruckentladungslampe LP geschaltet sind. Der Mittenabgriff M2 zwischen den beiden Dioden D8, D9 ist über einen Kondensator C7 mit dem Mittenabgriff M1 zwischen den beiden Transistoren des Gegentaktfrequenzgenerators 3 und über einen Kondensator C8 mit dem Mittenabgriff M3 zwischen dem Serienresonanzkreis 4 und der entsprechenden anderen Elektrode der Lampe LP verbunden. Parallel zu den beiden Dioden D8, D9 sind in Reihe zwei weitere Dioden D10 und D11 in Gleichstromvorwärtsrichtung geschaltet, wobei der Mittenabgriff M4 zwischen den beiden Dioden D10, D11 über einen Gleichstrom-Trennkondensator C9 und eine Drossel L2 ebenfalls mit dem Mittenabgriff M1 zwischen den beiden Transistoren des Gegentaktfrequenzgenerators 3 verbunden ist. Außerdem ist der Mittenabgriff M2 über einen Kondensator C10 mit dem Pluspol des Glättungskondensators im Gegentaktfrequenzgenerator 3 verbunden.

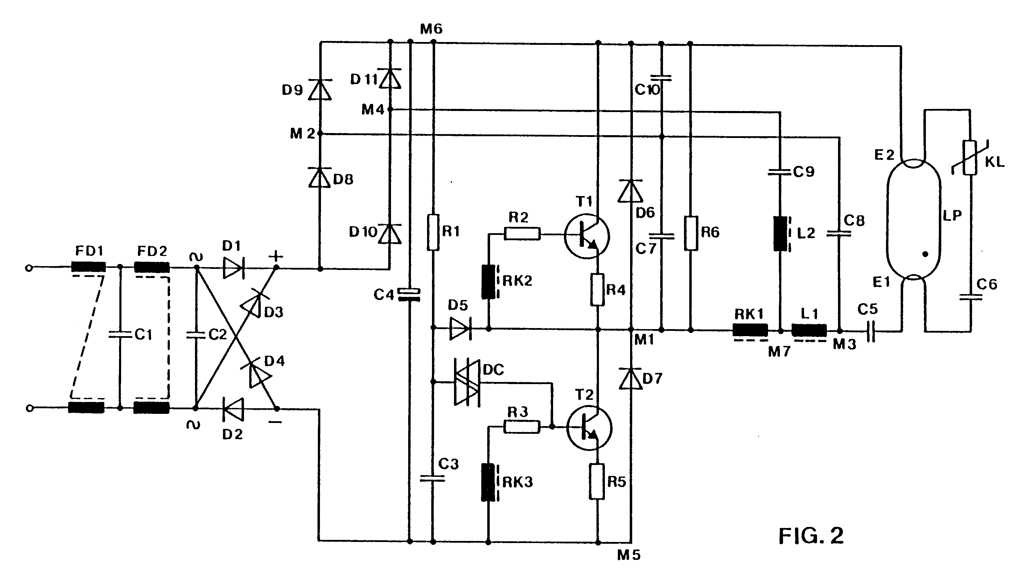

Figur 2 zeigt das genaue Schaltbild einer Schaltungsanordnung mit Oberwellenfilter zum Betrieb einer Niederdruckentladungslampe höherer Wattstufe. Direkt an den Netzeingang ist in jede Zuleitung ein Block einer nicht stromkompensierten Filterdrossel FD1 sowie parallel zum Eingang des Netzgleichrichters ein Filterkondensator C1 geschaltet. Anschließend ist in jede Zuleitung ein Block einer stromkompensierten Filterdrossel FD2 sowie parallel zum Gleichrichtereingang ein Stützkondensator C2 geschaltet. Diesem Hochfrequenzfilter folgt der Netzgleichrichter mit den Dioden D1 bis D4. Der selbststeuernde Gegentaktfrequenzgenerator besteht aus den beiden Transistoren T1, T2 mit den Rückstromdioden D6, D7, den Vorschaltwiderständen R2 bis R5, dem Steuerübertrager und dem Anlaufgenerator mit den Widerständen R1, R6, dem Startkondensator C3, der Diode D5 sowie dem Diac DC. Der Steuerübertrager arbeitet nach dem Rückkopplungsprinzip und setzt sich aus der Primärwicklung RK1 sowie den beiden Sekundärwicklungen RK2 und RK3 zusammen. Die Lampe LP ist mit einem Anschluß der Elektrode E1 über die Primärwicklung RK1 mit dem Mittenabgriff M1 zwischen den beiden Transistoren T1, T2 und mit einem Anschluß der anderen Elektrode E2 mit dem Pluspol der Gleichrichteranordnung verbunden. Außerdem ist ein Serienresonanzkreis aus Resonanzinduktivität L1, Koppelkondensator C5 und Resonanzkondensator C6 vorgesehen, wobei die Resonanzinduktivität L1 und der Koppelkondensator C5 zwischen die Primärwicklung RK1 des Steuerübertragers und den entsprechenden Anschluß der Elektrode E1 und der Resonanzkondensator C6 zwischen die auf der Heizkreisseite liegenden Anschlüsse der Elektroden E1 und E2 geschaltet sind. Parallel zu den Schaltstrecken der Transistoren T1, T2 liegt außerdem ein Glättungskondensator C4.

Die Funktionsweise einer solchen Schaltungsanordnung mit Gegentaktfrequenzgenerator und Serienresonanzkreis zum Zünden und Betrieb einer Niederdruckentladungslampe kann dem Buch "Elektronikschaltungen" von W. Hirschmann (Siemens AG), Seite 148, entnommen werden und soll hier nicht näher ausgeführt werden. Der in Reihe zum Resonanzkondensator C6 zusätzlich geschaltete Kaltleiter KL sorgt für eine entsprechende Vorheizung der Elektroden.

Die Schaltungsanordnung weist weiterhin ein Oberwellenfilter auf. Das Filter besteht aus zwei in Reihe und in Gleichstromvorwärtsrichtung am Pluspol des Netzgleichrichters angeschlossenen Dioden D8, D9, wobei der Mittenabgriff M2 zwischen den beiden Dioden D8, D9 über einen Kondensator C7 mit dem Mittenabgriff M1 zwischen den beiden Transistoren T1, T2 und über einen Kondensator C8 mit dem Mittenabgriff M3 zwischen Resonanzinduktivität L1 und Koppelkondensator C5 verbunden ist. Das Oberwellenfilter beinhaltet außerdem parallel zu den ersten beiden Dioden D8, D9 zwei weitere in Reihe und in Gleichstromvorwärtsrichtung geschaltete Dioden D10, D11, wobei der Mittenabgriff M4 zwischen diesen beiden Dioden D10, D11 über einen Gleichstromtrennkondensator C9 und eine Drossel L2 mit dem Abgriff M7 zwischen der Primärwicklung RK1 des Rückkoppeltransformators und der Resonanzinduktivität L1 verbunden ist. Durch die Anbindung der Pumpdrossel L2 zwischen der Primärwicklung RK1 und der Resonanzinduktivität L1 läßt sich das Schaltverhalten der Transistoren optimieren.

Die Funktionsweise des Oberwellenfilters im Zusammenwirken mit dem Gegentaktfrequenzgenerator ist im folgenden näher erläutert:
- Takt 1:: Der Transistor T2 wird leitend und zieht damit das Potential des Punktes M1 auf das Potential des Punktes M5 herunter, das gleich dem Potential des Minuspols am Glättungskondensator C4 ist. Die Pumpkondensatoren C7, C8 und die Induktivitäten L1 und L2 werden entsprechend der Potentialdifferenz "Augenblickswert der gleichgerichteten Spannung am Stützkondensator C2" zu "Potential am Punkt M5" geladen.
- Takt 2:: Der Transistor T2 sperrt, die Potentiale an den Punkten M1, M3 und M7 werden sprunghaft durch die Selbstinduktionsspannung der Induktivität L1 angehoben und heben damit auch die Potentiale der Kondensatoren C7 und C8. Die Kondensatoren C7 und C8 erhalten ein höheres Potential als das des Glättungskondensators C4 und können sich somit in diesen Kondensator C4 entladen. Auch die Energie der Induktivität L2 wird in den Kondensator C4 entladen.
- Takt 3:: Der Transistor T1 schaltet durch und hebt das Potential des Punktes M1 auf das Potential des Punktes M6 an, das dem Potential des Pluspols am Glättungskondensator C4 entspricht. Die Resonanzinduktivität L1 und die Pumpinduktivität L2 werden in Gegenrichtung geladen.
- Takt 4:: Der Transistor T1 sperrt und veranlaßt so die Resonanzinduktivität L1, sich in die Kondensatoren C7 und C8 zu entladen. Die Pumpkondensatoren C7 und C8 werden somit auch im Bereich des Netzspannungs-Nulldurchganges geladen, da das Potential der Pumpkondensatoren C7 und C8 in diesem Bereich negativ zum gleichgerichteten Augenblickswert des Potentials am Stützkondensator C2 wird.

Anschließend folgt wieder der Takt 1 und der Energietransport beginnt von neuem. Pro Periode der HF-Betriebsfrequenz wird so einmal Energie in den Glättungskondensator C4 gepumpt. Im Bereich des Netzspannungs-Scheitelwertes werden die Pumpkondensatoren C7, C8 auf den Scheitelwert der Netzspannung aufgeladen, anschließend sinkt die Spannung und damit die Energie wieder. In den Glättungskondensator C4 wird während der Netzspannungshalbwellen Energie entsprechend dem Augenblickswert der gleichgerichteten Spannung am Stützkondensator C2 gepumpt.

Im Bereich des Netzspannungs-Nulldurchganges ist die netzspannungsbedingte Potentialdifferenz zwischen dem Punkt M5 und dem Pluspol des Netzgleichrichters Null, trotzdem kommt es zu einer Spannungsdifferenz: Die in der Resonanzinduktivität L1 gespeicherte Energie wird in diesem Bereich zum Teil über die Kondensatoren C7 und C8 genauso wie die gespeicherte Energie der Induktivität L2 in den Glättungskondensator C4 zurückgepumpt.

In der nachfolgenden Bestückungsliste sind die verwendeten Schaltungselemente für eine Schaltungsanordnung zum Betrieb einer 58 W-Leuchtstofflampe an 220 V-Wechselspannung zusammengestellt:
- FD1 :: EF25 25 mH
- FD2 :: EF20, 50 mH
- C1 :: 120 nF, 250 V∼
- D1 - D4 :: Gleichrichter-Brückenschaltung B250, C800
- C2 :: 220 nF, 250 V∼
- R1, R6 :: 510 kΩ
- C3 :: 47 nF, 250 V-
- D5 :: 1N4005
- DC :: N413M
- R2, R3 :: 8,2Ω
- T1, T2 :: MJE13007
- R4, R5 :: 0,39 Ω
- D6 - D11 :: RGP10J
- C6 :: 10 nF, 630 V-
- C7 :: 4,7 nF 630 V-
- RK1 :: 9 Windungen (10x6x4)
- RK2, RK3 :: 3 Windungen
- C4 :: 10 µF, 450 V-
- L1 :: EF25, 1,4 mH
- C5 :: 100 nF, 250 V∼
- C8 :: 18 nF, 1000 V-
- C9 :: 150 nF, 400 V-
- L2 :: EF20, 2 mH
- C10 :: 12nF, 400 V-
- KL :: Kaltleiter 65 Ω
Mit einer solchermaßen bestückten Schaltungsanordnung ergibt sich bei gegebener Netzspannung eine Kurvenform des Netzstromes mit einem Netzleistungsfaktor von größer 0,9; der Netzstrom-Oberwellengehalt nach VDE/IEC liegt unter den zulässigen Grenzen.

## Patentansprüche

1. Schaltungsanordnung zum hochfrequenten Betrieb einer Niederdruckentladungslampe (LP), wobei die Schaltung folgende Merkmale aufweist:
- einen Netzgleichrichter (2);
- einen mit dem Gleichstromausgang des Netzgleichrichters (2) verbundenen Gegentaktfrequenzgenerator (3) mit zwei alternierend schaltenden Transistoren (T1, T2), einer Ansteuerschaltung und einem Glättungskondensator (C4), wobei ein Mittenabgriff (M1) zwischen den beiden Transistoren vorgesehen ist;
- einen Serienresonanzkreis (4), bestehend aus Resonanzinduktivität (L1), Kopplungskondensator (C5) und Resonanzkapazität (C6);
- Anschlußleitungen für die Niederdruckentladungslampe (LP), wobei eine Leitung die erste Elektrode (E1) der Lampe (LP) über die Resonanzinduktivität (L1) mit dem Mittenabgriff (M1) zwischen den beiden Transistoren (T1, T2) und eine weitere Leitung die zweite Elektrode (E2) der Lampe (LP) mit dem Plus- und/oder Minuspol der Gleichrichteranordnung verbindet;
- ein aktives Oberwellenfilter, bestehend aus zwei parallel zueinander angeordneten Reihenschaltungen von jeweils zwei Dioden (D8, D9; D10, D11), die in Gleichstromvorwärtsrichtung am Netzgleichrichter (2) angeschlossen sind, sowie aus zwei Kondensatoren (C7, C8), die den Mittenabgriff (M2) zwischen den beiden ersten Dioden (D8, D9) mit dem Mittenabgriff (M1) zwischen den beiden Transistoren (T1, T2) bzw. mit dem Abgriff (M3) zwischen der Resonanzinduktivität (L1) und der ersten Elektrode (E1) der Lampe (LP) verbinden,
dadurch gekennzeichnet, daß der Mittenabgriff (M4) zwischen den beiden zweiten Dioden (D10, D11) über eine Induktivität (L2) mit einem Abgriff (M7) zwischen dem Mittenabgriff (M1) zwischen den beiden Transistoren (T1, T2) und der ersten Elektrode (E1) der Lampe (LP) verbunden ist.

2. Schaltungsanordnung nach Anspruch 1, dadurch gekennzeichnet, daß in Reihe zu der Induktivität (L2) im Oberwellenfilter ein Gleichstrom-Trennkondensator (C9) geschaltet ist.

3. Schaltungsanordnung nach Anspruch 1, dadurch gekennzeichnet, daß der Mittenabgriff (M2) zwischen den beiden ersten Dioden (D8, D9) des Oberwellenfilters über einen Kondensator (C10) mit dem Pluspol des Glättungskondensators (C4) verbunden ist.

## Claims

1. Circuit arrangement for the high-frequency operation of a low-pressure discharge lamp (LP), in which the circuit has the following features:
- a mains rectifier (2);
- a push-pull frequency generator (3) which is connected to the direct-current output of the mains rectifier (2) and comprises two alternately switching transistors (T1, T2), a drive circuit and a smoothing capacitor (C4), a centre tap (M1) being provided between the two transistors;
- a series resonance circuit (4) comprising resonance inductor (L1), coupling capacitor (C5) and resonance capacitor (C6);
- connecting leads for the low-pressure discharge lamp (LP), one lead connecting the first electrode (E1) of the lamp (LP) via the resonance inductor (L1) to the centre tap (M1) between the two transistors (T1, T2) and a further lead connecting the second electrode (E2) of the lamp (LP) to the positive and/or negative terminal of the rectifier arrangement;
- an active harmonic filter made up of two series circuits, arranged in parallel with one another, of two diodes each (D8, D9; D10, D11) connected to the mains rectifier (2) in the direct-current forward direction, and of two capacitors (C7, C8) which connect the centre tap (M2) between the two first diodes (D8, D9) to the centre tap (M1) between the two transistors (T1, T2) or to the tap (M3) between the resonance inductor (L1) and the first electrode (E1) of the lamp (LP),
characterised in that the centre tap (M4) between the two second diodes (D10, D11) is connected via an inductor (L2) to a tap (M7) between the centre tap (M1) between the two transistors (T1, T2) and the first electrode (E1) of the lamp (LP).

2. Circuit arrangement according to Claim 1, characterised in that a direct-current isolating capacitor (C9) is connected in series with the inductor (L2) in the harmonic filter.

3. Circuit arrangement according to Claim 1, characterised in that the centre tap (M2) between the two first diodes (D8, D9) of the harmonic filter is connected via a capacitor (C10) to the positive terminal of the smoothing capacitor (C4).

## Revendications

1. Montage pour faire fonctionner en haute fréquence une lampe à décharge basse pression (LP), du type présentant les caractéristiques suivantes :
- un redresseur (2) de raccordement au réseau;
- un générateur symétrique de fréquence (3), qui est raccordé à la sortie à courant continu du redresseur (2) de raccordement au réseau et qui comporte deux transistors (T1,T2) commutant alternativement, un circuit de commande et un condensateur de lissage (C4), une prise médiane (M1) étant prévue entre les deux transistors;
- un circuit résonnant série (4), constitué par une inductance de résonance (L1), un condensateur de couplage (C5) et une capacité de résonance (C6);
- des conducteurs de raccordement pour la lampe à décharge basse pression (LP), un conducteur raccordant la première électrode (E1) de la lampe (LP), par l'intermédiaire de l'inductance de résonance (L1), à la prise médiane (M1) entre les deux transistors (T1,T2), et un autre conducteur raccordant la seconde électrode (E2) de la lampe (LP) au pôle positif et/ou au pôle négatif du redresseur;
- un filtre actif à ondes de surface, constitué par deux circuits série, qui sont branchés réciproquement en parallèle et qui sont constitués chacun de deux diodes (D8;D9;D10;D11) qui sont raccordées dans le sens direct du courant continu au redresseur (2) de raccordement au réseau, ainsi que par deux condensateurs (C7,C8), qui relient la prise médiane (M2), située entre les deux premières diodes (D8,D9), à la prise médiane (M1) située entre les deux transistors (T1,T2) ou à la prise (M3) située entre l'inductance de résonance (L1) et la première électrode (E1) de la lampe (LP),
caractérisé par le fait que la prise médiane (M4) située entre les deux secondes diodes (D10,D11) est raccordée, par l'intermédiaire d'une inductance (L2), à une prise (M7) située entre la prise médiane (M1) présente entre les deux transistors (T1,T2), et la première électrode (E1) de la lampe (LP).

2. Montage suivant la revendication 1, caractérisé par le fait qu'un condensateur de séparation du courant continu (C9) est branché en série avec l'inductance (L2), dans le filtre à ondes de surface.

3. Montage suivant la revendication 1, caractérisé par le fait que la prise médiane (M2) entre les deux premières diodes (D8,D9) du filtre à ondes de surface est raccordée, par l'intermédiaire d'un condensateur (C10), au pôle positif du condensateur de lissage (C4).
